# EUROPEAN PATENT APPLICATION

(11) **EP 4 398 374 A1**
(43) Date of publication of application: **10.07.2024**
(21) Application number: 23739887.0
(22) Date of filing: 05.01.2023
(51) Int. Cl.: H01M 10/0587, H01M 10/0525

(54) **WINDING NEEDLE, WINDING MACHINE, BATTERY CELL WINDING METHOD**

(30) Priority: 14.01.2022 CN 202210044920
(71) Applicant: Contemporary Amperex Technology Co., Limited, Ningde, Fujian 352100 (CN)
(72) Inventor: ZHANG, Xiaowei, Ningde, Fujian 352100 (CN); ZHANG, Wei, Ningde, Fujian 352100 (CN); BAI, Qinglin, Ningde, Fujian 352100 (CN); WEN, Yuqian, Ningde, Fujian 352100 (CN); TANG, Minghao, Ningde, Fujian 352100 (CN); ZHANG, Shengwu, Ningde, Fujian 352100 (CN)
(74) Representative: Holt, Lucy Rose
(86) International application number: PCT/CN2023/070740
(87) International publication number: WO 2023/134543

(57) **Abstract**

The present application discloses a winding needle, a winding machine, and a battery cell winding method. The winding needle comprises: a first connecting piece; and a second connecting piece, used for being combined with the first connecting piece, the second connecting piece and the first connecting piece being coaxially arranged, and the length of the combined first connecting piece and second connecting piece being larger than the length of the first connecting piece or the second connecting piece. By changing the structure of the winding needle, the stiffness of the winding needle is improved, and the efficiency and quality of winding operation are improved.

## Description

### CROSS-REFERENCE TO RELATED APPLICATIONS

This application refers to Chinese Patent Application No. 202210044920.8, filed on January 14, 2022 and entitled "WINDING MANDREL, WINDING MACHINE, AND BATTERY CELL WINDING METHOD", which is incorporated herein by reference in its entirety.

### TECHNICAL FIELD

This application relates to the field of batteries, and in particular, to a winding mandrel, a winding machine, and a battery cell winding method.

### BACKGROUND

Lithium-ion batteries have advantages of small volume, high energy density, high power density, long cycle life, long storage time, and the like, and are widely used in some electronic devices, electric vehicles, electric toys, and electric devices. For example, lithium-ion batteries are widely used in mobile phones, laptop computers, electric bicycles, electric vehicles, electric airplanes, electric ships, electric toy cars, electric toy ships, electric toy airplanes, electric tools, and the like.

With wide application of lithium-ion batteries, people pay increasing attention to a manufacturing method of battery cells as power generation components of lithium-ion batteries. A battery cell is typically manufactured by winding a positive electrode plate, a negative electrode plate, and a separator on a winding mandrel for many times. However, the size of the battery cell manufactured using this method is limited by the size of the winding mandrel, that is, a winding mandrel that is long enough is required for manufacturing a relatively long battery cell, but as the length of the winding mandrel increases, the stiffness of the winding mandrel usually fails to meet the requirements. Therefore, a new winding mandrel is urgently needed to solve the foregoing technical problems.

### SUMMARY

This application proposes a winding mandrel, a winding machine, and a battery cell winding method. Changing a structure of an existing winding mandrel improves stiffness of the winding mandrel and improves the efficiency and quality of a winding operation.

According to a first aspect of this application, a winding mandrel is provided, including:
a first connecting member and a second connecting member configured to be combined with the first connecting member. The second connecting member and the first connecting member are arranged coaxially, and length of the combined first connecting member and second connecting member is greater than length of the first connecting member or the second connecting member.

The first connecting member and the second connecting member are combined coaxially to obtain a winding mandrel with the length greater than the length of the first connecting member or the second connecting member, so that the overall stiffness of the winding mandrel can be improved while guaranteeing winding length of the winding mandrel without increasing the diameter of the winding mandrel, and bending deformation of the winding mandrel in a winding process is reduced, meeting requirements for winding a wide and long battery cell. In addition, the diameter of the winding mandrel is small, which can increase energy density of a battery cell wound using the winding mandrel, thereby improving the efficiency and quality of a winding operation.

In some embodiments, the first connecting member includes two ends along its own length direction, the second connecting member also includes two ends along its own length direction, and one end of the first connecting member along its length direction and one end of the second connecting member along its length direction are combined.

The ends of the first connecting member and the second connecting member are combined, so that it is convenient to arrange the first connecting member and the second connecting member coaxially and to limit the lengths of the first connecting member and the second connecting member based on length of the winding mandrel.

In some embodiments, one end of the first connecting member along its length direction and one end of the second connecting member along its length direction are connected in an insertion manner.

The ends of the first connecting member and the second connecting member are connected in an insertion manner, so that the first connecting member and the second connecting member can support each other and form an entirety, thereby improving the overall stiffness of the winding mandrel.

In some embodiments, one end of the first connecting member along its length direction and one end of the second connecting member along its length direction are combined in a manner of being apart from each other.

The ends of the first connecting member and the second connecting member are combined in a manner of being apart from each other, so that the lengths of the first connecting member and the second connecting member can be further reduced while guaranteeing the overall length of the winding mandrel, thereby improving the overall stiffness of the winding mandrel. In addition, when the lengths of the first connecting member and the second connecting member are reduced, diameters of the first connecting member and the second connecting member can be further reduced while guaranteeing the overall stiffness of the winding mandrel, thereby increasing the energy density of the battery cell wound using the winding mandrel.

In some embodiments, the winding mandrel further includes an intermediate connecting member, and one end of the first connecting member along its length direction and one end of the second connecting member along its length direction are combined through the intermediate connecting member.

The ends of the first connecting member and the second connecting member are connected using the intermediate connecting member, so that the first connecting member, the intermediate connecting member, and the second connecting member form an entirety and can support each other, thereby improving the overall stiffness of the winding mandrel. When the winding mandrel is withdrawn after winding, the intermediate connecting member remains inside the battery cell, which can further support an inner circle of the battery cell, thereby maintaining a structure of the battery cell.

In some embodiments, the intermediate connecting member includes a connecting rod, and two ends of the connecting rod are connected through insertion to one end of the first connecting member along its length direction and one end of the second connecting member along its length direction, respectively.

The ends of the first connecting member and the second connecting member are connected using the connecting rod, so that the first connecting member, the connecting rod, and the second connecting member form an entirety and can support each other, thereby improving the overall stiffness of the winding mandrel significantly.

In some embodiments, the connecting rod is a solid rod or a hollow rod.

Either a solid or a hollow connecting rod can connect the first connecting member and the second connecting member. The solid connecting rod has higher structural strength. If an electrode plate and separator to be wound are relatively wide, the solid connecting rod can be used.

In some embodiments, the intermediate connecting member includes a hollow sleeve, and the first connecting member and the second connecting member are inserted into the hollow sleeve from two ends of the hollow sleeve, respectively.

The first connecting member and the second connecting member are connected using the hollow sleeve, so that the first connecting member, the hollow sleeve, and the second connecting member form an entirety and can support each other, thereby improving the overall stiffness of the winding mandrel significantly.

In some embodiments, the first connecting member and the second connecting member are connected to or apart from each other in the hollow sleeve.

The first connecting member and the second connecting member being either connected to or apart from each other in the hollow sleeve can be sleeved with the hollow sleeve, so that the resulting connection structure has higher strength. If an electrode plate and separator to be wound are relatively wide, the connection structure can be used.

In some embodiments, the hollow sleeve is provided with a plurality of ventilation holes.

Because the first connecting member, the second connecting member, and the hollow sleeve are closely connected, the provision of the ventilation holes facilitates insertion of the first connecting member and the second connecting member into the hollow sleeve and prevents deformation due to an excessive pressure inside the hollow sleeve.

In some embodiments, surfaces of the first connecting member and the second connecting member are provided with coatings to reduce a frictional force generated during pull-out from the battery cell.

The coatings that can reduce the frictional force are provided, so that the first connecting member and the second connecting member can be easily pulled out from the battery cell when the winding mandrel is withdrawn after winding, which prevents the electrode plate and separator of a core from being displaced and prevents the core from being pulled out, thereby guaranteeing the quality of the battery cell.

In some embodiments, the other end of the first connecting member along its length direction is provided with a radial connecting hole, the other end of the second connecting member along its length direction is also provided with a radial connecting hole, and the first connecting member and the second connecting member are configured to be fixed to a winding machine through the connecting holes.

The winding machine is provided with positioning pins or positioning screws corresponding to the connecting holes, and the first connecting member and the second connecting member are fixed to the winding machine through the radial connecting holes, facilitating assembly and disassembly.

According to a second aspect of this application, a winding machine is provided, including the winding mandrel according to any one of the foregoing embodiments.

The winding mandrel according to any one of the foregoing embodiments is used, which improves stiffness of the winding mandrel, enables the winding mandrel to bear a greater centrifugal force, and makes deflection deformation not prone to occur under a high-speed rotation state, so that the acceleration, deceleration, and maximum winding speed of the winding machine can be improved, thereby improving winding efficiency and reducing production costs.

In some embodiments, the winding machine includes a winding mandrel telescopic mechanism, and the first connecting member and the second connecting member are installed on the winding mandrel telescopic mechanism so as to be driven by the winding mandrel telescopic mechanism to approach or leave each other.

According to a third aspect of this application, a battery cell winding method is provided, including:
providing an electrode plate and a separator; and
winding the electrode plate and the separator using a winding mandrel, where the winding mandrel is the winding mandrel according to any one of the foregoing embodiments.

### BRIEF DESCRIPTION OF DRAWINGS

The accompanying drawings described herein are intended for better understanding of this application and constitute a part of this application. Illustrative embodiments and descriptions thereof in this application are intended to interpret this application without constituting any inappropriate limitation on this application. In the accompanying drawings:
FIG. 1 is a schematic front view of a winding mandrel according to some embodiments of this application;
FIG. 2 is a cross-sectional view along A-A in FIG. 1;
FIG. 3 is a schematic exploded view of a winding mandrel according to some embodiments of this application;
FIG. 4 is a schematic diagram of a winding mandrel in a usage state according to some embodiments of this application;
FIG. 5 is a schematic front view of a winding mandrel according to some embodiments of this application;
FIG. 6 is a cross-sectional view along B-B in FIG. 5;
FIG. 7 is a schematic front view of a winding mandrel according to some embodiments of this application;
FIG. 8 is a cross-sectional view along C-C in FIG. 7;
FIG. 9 is a schematic exploded view of a winding mandrel according to some embodiments of this application;
FIG. 10 is a schematic front view of a connecting rod according to some embodiments of this application;
FIG. 11 is a schematic diagram of a winding mandrel in a usage state according to some embodiments of this application;
FIG. 12 is a schematic front view of a winding mandrel according to some embodiments of this application;
FIG. 13 is a cross-sectional view along D-D in FIG. 12;
FIG. 14 is a schematic exploded view of a winding mandrel according to some embodiments of this application;
FIG. 15 is a schematic front view of a hollow sleeve according to some embodiments of this application;
FIG. 16 is a schematic diagram of a winding mandrel in a usage state according to some embodiments of this application;
FIG. 17 is a schematic cross-sectional view of a winding mandrel according to some embodiments of this application; and
FIG. 18 is a schematic exploded view of a winding mandrel according to some embodiments of this application.

### Description of reference signs:

1. first connecting member; 101. first fixing end; 102. first body portion; 103. first combination end; 104. first connecting hole; 2. second connecting member; 201. second fixing end; 202. second body portion; 203. second combination end; 204. second connecting hole; 3. connecting rod; 301. third combination end; 302. third body portion; 303. fourth combination end; 304. first ventilation hole; 4. hollow sleeve; 401. fifth combination end; 402. fourth body portion; 403. sixth combination end; 404. second ventilation hole; and 5. diaphragm

### DESCRIPTION OF EMBODIMENTS

To make the objectives, technical solutions, and advantages of this application clearer, the following clearly and completely describes the technical solutions in the embodiments of this application with reference to the accompanying drawings showing a plurality of embodiments of this application. It should be understood that the embodiments described are only some rather than all embodiments of this application. All other embodiments obtained by persons of ordinary skill in the art based on the embodiments of this application without creative efforts shall fall within the protection scope of this application.

Unless otherwise defined, all technical and scientific terms used in this application shall have the same meanings as commonly understood by those skilled in the art to which this application relates. The terms used in the specification of this application are intended to merely describe the specific embodiments rather than to limit this application. The terms "include", "comprise", "there be", "have", "contain", and "with" in this specification, claims, and brief description of drawings of this application are inclusive terms. Therefore, if a method or an apparatus "includes", "comprises", or "has", for example, one or more steps or elements, the method or the apparatus contains the one or more steps or elements, but is not limited to the one or more elements. In the specification, claims, or accompanying drawings of this application, the terms "first", "second", and the like are intended to distinguish between different objects rather than to indicate a particular order or relative importance. In addition, the terms "first" and "second" are merely for the purpose of description, and shall not be understood as any indication or implication of relative importance or any implicit indication of the number of technical features indicated. Therefore, a feature limited by "first" or "second" may explicitly or implicitly include one or more features. In the description of this application, "a plurality of" means at least two unless otherwise stated.

In the descriptions of this application, it should be understood that the orientations or positional relationships indicated by the terms "center", "transverse", "length", "width", "upper", "lower", "front", "rear", "left", "right", "perpendicular", "horizontal", "top", "bottom", "inside", "outside", "axial", "radial", "circumferential", and the like are based on the orientations or positional relationships shown in the accompanying drawings. These terms are merely for ease and brevity of description of this application rather than indicating or implying that the apparatuses or components mentioned must have specific orientations or must be constructed or manipulated according to specific orientations, and therefore shall not be construed as any limitations on this application.

In the description of this application, it should be noted that unless otherwise specified and defined explicitly, the terms "mounting", "connection", "join", and "attachment" should be understood in their general senses. For example, they may refer to a fixed connection, a detachable connection, or an integral connection, and may refer to a direct connection, an indirect connection via an intermediate medium, or an internal communication between two elements. Persons of ordinary skills in the art can understand specific meanings of these terms in this application as appropriate to specific situations.

Reference to "embodiment" in this application means that specific features, structures, or characteristics described with reference to the embodiment may be included in at least one embodiment of this application. The word "embodiment" appearing in various places in the specification does not necessarily refer to the same embodiment or an independent or alternative embodiment that is exclusive of other embodiments. It is explicitly or implicitly understood by persons skilled in the art that the embodiments described herein may be combined with other embodiments.

As mentioned above, it should be noted that when used in this specification, the term "include/contain" is used to clearly indicate existence of the feature, integer, step, or component, but does not exclude existence or addition of one or more other features, integers, steps, or components or sets of features, integers, steps, or components. As used in this application, singular forms "one", "a", and "the" also include plural forms, unless otherwise clearly dictated in the context.

The terms "a" and "one" in this specification can mean a single, but can also have the same meaning as "at least one" or "one or more". The term "approximately" generally means a mentioned value plus or minus 10%, or more specifically the mentioned value plus or minus 5%. The term "or" used in the claims means "and/or" unless it is clearly stated that the term "or" only refers to an alternative solution.

The term "and/or" in this application is only an associative relationship for describing associated objects, indicating that three relationships may be present. For example, A and/or B may indicate three cases: presence of only A; presence of both A and B; and presence of only B. In addition, the character "/" in this application generally indicates an "or" relationship between contextually associated objects.

Working of a lithium-ion battery (a battery cell) mainly relies on migration of lithium ions between a positive electrode plate and a negative electrode plate. The lithium-ion battery uses an inserted lithium compound as an electrode material. Currently, main common materials used for a positive electrode of the lithium-ion battery include: lithium cobalt oxide (LiCoO₂), lithium manganate oxide (LiMn₂O₄), lithium nickel oxide (LiNiO₂), and lithium iron phosphate (LiFePO₄). A separator is disposed between the positive electrode plate and the negative electrode plate to form a film structure with three layers of materials. The film structure is generally manufactured into a battery cell with a required shape through winding or stacking. For example, a film structure with three layers of materials in a cylindrical battery is wound into a cylindrical battery cell, and a film structure in a prismatic battery is wound or stacked into an approximately cuboid-shaped battery cell.

The applicant has found that the size of a lithium-ion battery manufactured through winding is limited by the size of a winding mandrel, that is, a winding mandrel that is long enough is required for manufacturing a relatively long lithium-ion battery, but as only the length of the winding mandrel increases, stiffness of the winding mandrel usually fails to meet requirements. To improve stiffness of a long winding mandrel, the applicant has increased the diameter of the winding mandrel. However, after the diameter of the winding mandrel was increased, the applicant found that the winding mandrel would occupy too much volume of a battery, decreasing energy density of the battery.

After long-term research, the applicant has designed a new winding mandrel. The winding mandrel includes a first connecting member and a second connecting member, where the second connecting member is configured to be combined with the first connecting member, the second connecting member and the first connecting member are arranged coaxially, and length of the combined first connecting member and second connecting member is greater than length of the first connecting member or the second connecting member. For the new winding mandrel, the length of the winding mandrel is increased and the stiffness of the winding mandrel is improved, which improves the efficiency and quality of a winding operation. In addition, energy density of a battery cell wound using the winding mandrel can be increased.

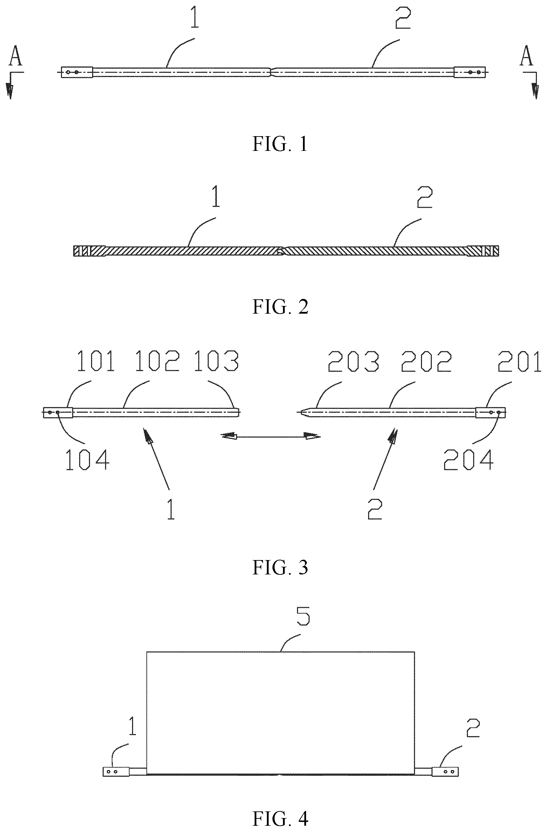

For better understanding of this application, the following describes in detail the embodiments of this application with reference to FIGs. 1 to 18.

FIGs. 1, 2, and 3 show a winding mandrel according to an embodiment of this application. The winding mandrel includes a first connecting member 1 and a second connecting member 2, where the second connecting member 2 is configured to be combined with the first connecting member 1, the second connecting member 2 and the first connecting member 1 are arranged coaxially, and length of the combined first connecting member 1 and second connecting member 2 is greater than length of the first connecting member 1 or the second connecting member 2.

The first connecting member 1 and the second connecting member 2 are combined coaxially to obtain a winding mandrel with the length greater than the length of the first connecting member 1 or the second connecting member 2, so that the overall stiffness of the winding mandrel can be improved while guaranteeing winding length of the winding mandrel without increasing the diameter of the winding mandrel, and bending deformation of the winding mandrel in a winding process is reduced, meeting requirements for winding a wide and long battery cell. In addition, the diameter of the winding mandrel is small, which can increase energy density of a battery cell wound using the winding mandrel, thereby improving the efficiency and quality of a winding operation.

In some embodiments, as shown in FIGs. 1 and 2, the first connecting member 1 includes two ends along its own length direction, the second connecting member 2 also includes two ends along its own length direction, and one end of the first connecting member 1 along its length direction and one end of the second connecting member 2 along its length direction are combined.

The ends of the first connecting member 1 and the second connecting member 2 are combined, so that it is convenient to arrange the first connecting member 1 and the second connecting member 2 coaxially and to limit a ratio of the lengths of the first connecting member 1 and the second connecting member 2 to the overall length of the winding mandrel.

As shown in FIGs. 3 and 4, the first connecting member 1 includes a first combination end 103, a first body portion 102, and a first fixing end 101; and the second connecting member 2 includes a second combination end 203, a second body portion 202, and a second fixing end 201. A portion of the first connecting member 1 winding the battery cell is the first body portion 102, and a portion of the second connecting member 2 winding the battery cell is the second body portion 202. Cross sections of the first body portion 102 and the second body portion 202 are circular, elliptical, polygonal with more than three sides, polygonal with smooth transition of end angles, or flat.

Materials of the first connecting member 1 and the second connecting member 2 are not limited to commonly used carbon steel, carbon structural steel, high-quality structural steel, carbon tool steel, free-cutting structural steel, alloy steel, ordinary low-alloy steel, alloy steel for engineering structures, alloy steel for mechanical structures, alloy structural steel, alloy tool steel, high-speed tool steel, and the like.

In some embodiments, as shown in FIGs. 1 and 2, one end of the first connecting member 1 along its length direction and one end of the second connecting member 2 along its length direction are connected in an insertion manner. FIG. 4 shows a state of winding an electrode plate and a separator using the winding mandrel according this embodiment. A diaphragm 5 in FIG. 4 includes a positive electrode plate, a negative electrode plate, and a separator.

The ends of the first connecting member 1 and the second connecting member 2 are connected in an insertion manner, so that the first connecting member 1 and the second connecting member 2 can support each other and form an entirety, thereby improving the overall stiffness of the winding mandrel.

The first combination end 103 of the first connecting member 1 is provided with a conical, cylindrical, or polygonal insertion slot, and the second combination end 203 of the second connecting member 2 is correspondingly provided with a conical, cylindrical, or polygonal plug. The provision of such insertion-connection structure facilitates coaxial arrangement of the first connecting member 1 and second connecting member 2.

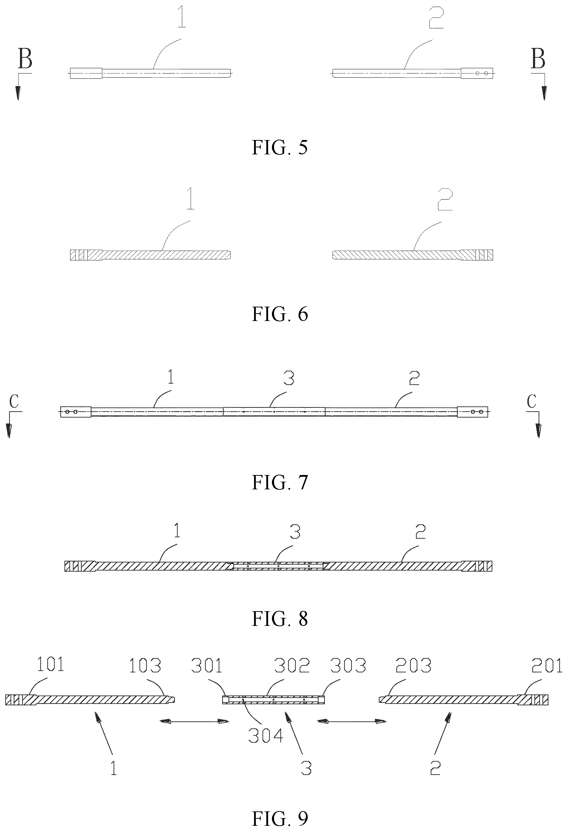

In some embodiments, as shown in FIGs. 5 and 6, one end of the first connecting member 1 along its length direction and one end of the second connecting member 2 along its length direction are combined in a manner of being apart from each other.

The ends of the first connecting member 1 and the second connecting member 2 are apart from each other, so that the lengths of the first connecting member 1 and the second connecting member 2 can be further decreased, thereby improving the overall stiffness of the winding mandrel. Moreover, the diameters of the first connecting member 1 and the second connecting member 2 can be further reduced, thereby increasing energy density of the battery cell.

In some embodiments, the winding mandrel further includes an intermediate connecting member, and one end of the first connecting member 1 along its length direction and one end of the second connecting member 2 along its length direction are combined through the intermediate connecting member.

The ends of the first connecting member 1 and the second connecting member 2 are connected using the intermediate connecting member, so that the first connecting member 1, the intermediate connecting member, and the second connecting member 2 form an entirety and can support each other, thereby improving the overall stiffness of the winding mandrel.

When the winding mandrel is withdrawn after winding, the intermediate connecting member remains inside the battery cell, which can further support an inner circle of the battery cell, thereby maintaining a structure of the battery cell. The intermediate connecting member is made of plastic and does not affect electrical performance of the battery cell when remaining inside the battery cell.

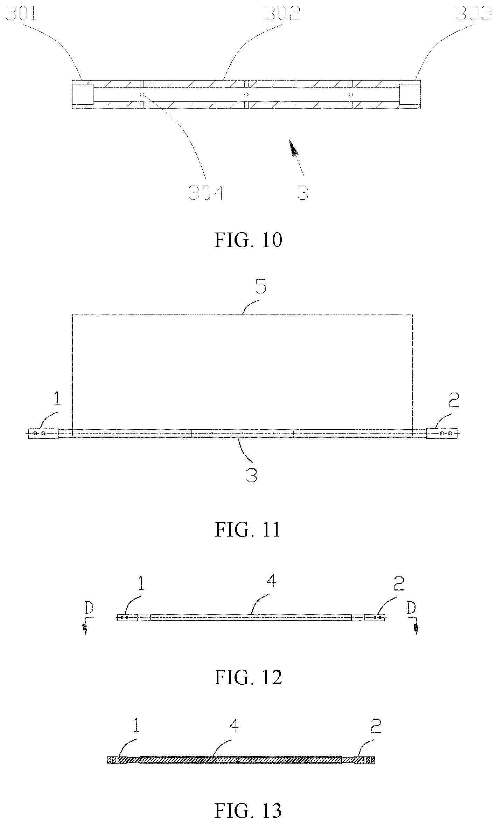

In some embodiments, as shown in FIGs. 7, 8, 9, and 10, the intermediate connecting member includes a connecting rod 3, and two ends of the connecting rod 3 are connected through insertion to one end of the first connecting member 1 along its length direction and one end of the second connecting member 2 along its length direction, respectively. FIG. 11 shows a state of winding an electrode plate and a separator using the winding mandrel according to this embodiment. A diaphragm 5 in FIG. 11 includes a positive electrode plate, a negative electrode plate, and a separator.

The ends of the first connecting member 1 and the second connecting member 2 are connected using the connecting rod 3, so that the first connecting member 1, the connecting rod 3, and the second connecting member 2 form an entirety and can support each other, thereby improving the overall stiffness of the winding mandrel significantly.

As shown in FIGs. 9 and 10, the connecting rod 3 includes a third combination end 301, a third body portion 302, and a fourth combination end 303. The third combination end 301 is connected through insertion to the first combination end 103 of the first connecting member 1, and the fourth combination end 303 is connected through insertion to the second combination end 203 of the second connecting member 2. In this way, portions winding the battery cell are mainly the second body portion 202, the third body portion 302, and the first body portion 102.

A coating that can increase a frictional force may be provided on an outer wall of the connecting rod 3. Providing the coating can increase a frictional force between the connecting rod 3 and the diaphragm 5, which not only facilitates winding, but also can stably keep the connecting rod 3 inside the battery cell.

To facilitate insertion-connection, the first combination end 103 and the second combination end 203 are provided with convex connection structures, respectively. Correspondingly, two ends of the connecting rod 3 are provided with concave connection structures, respectively. The provision of such insertion-connection structure facilitates coaxial arrangement of the first connecting member 1, connecting rod 3, and second connecting member 2.

The connecting rod 3 is made of plastic and does not affect the electrical performance of the battery cell when remaining inside the battery cell.

In some embodiments, the connecting rod 3 is a solid rod or a hollow rod. The connecting rod 3 shown in FIG. 9 is a hollow rod.

Either a solid or a hollow connecting rod 3 can connect the first connecting member 1 and the second connecting member 2. The solid connecting rod 3 has higher structural strength. If an electrode plate and separator to be wound are relatively wide, the solid connecting rod 3 can be used.

In some embodiments, the hollow connecting rod 3 is provided with a plurality of first ventilation holes 304.

Because the first connecting member 1, the second connecting member 2, and the connecting rod 3 are closely connected, the provision of the ventilation holes facilitates insertion of the first connecting member 1 and the second connecting member 2 into the connecting rod 3 and prevents deformation due to an excessive pressure inside the connecting rod 3.

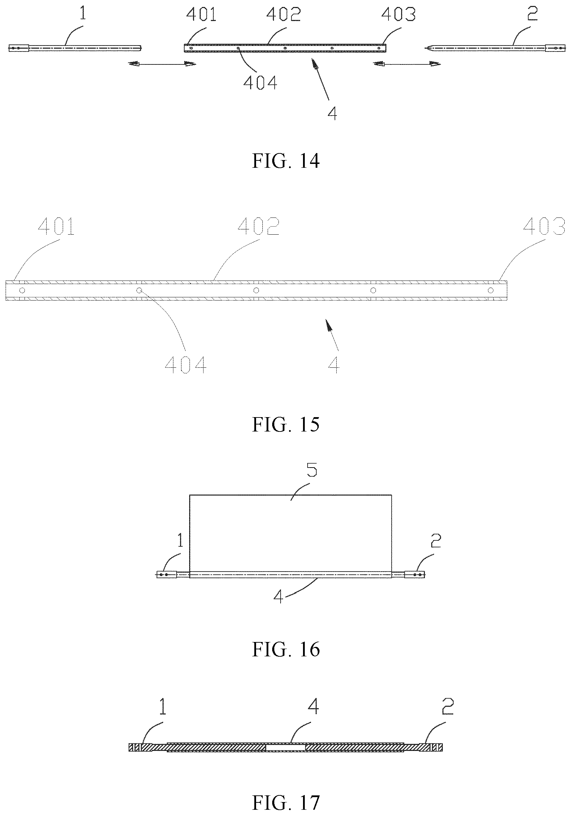

In some embodiments, as shown in FIGs. 12, 13, 14, and 15, the intermediate connecting member includes a hollow sleeve 4, and the first connecting member 1 and the second connecting member 2 are inserted into the hollow sleeve 4 from two ends of the hollow sleeve 4, respectively. FIG. 16 shows a state of winding an electrode plate and a separator using the winding mandrel according to this embodiment. A diaphragm 5 in FIG. 16 includes a positive electrode plate, a negative electrode plate, and a separator.

The first connecting member 1 and the second connecting member 2 are connected using the hollow sleeve 4, so that the first connecting member 1, the hollow sleeve 4, and the second connecting member 2 form an entirety and can support each other, thereby improving the overall stiffness of the winding mandrel significantly.

As shown in FIGs. 14 and 15, the hollow sleeve 4 includes a fifth combination end 401, a fourth body portion 402, and a sixth combination end 403. In this way, a portion winding the battery cell is mainly the fourth body portion 402.

An inner wall of the hollow sleeve 4 may be provided with a coating to reduce a frictional force generated when the first connecting member 1 and the second connecting member 2 are pulled out. The coating that can reduce the frictional force is provided, so that the first connecting member 1 and the second connecting member 2 can be easily pulled out from the hollow sleeve 4 when the winding mandrel is withdrawn after winding, which prevents the hollow sleeve 4 from being displaced and prevents the electrode plate and separator of a core from being displaced, thereby preventing the core from being pulled out and guaranteeing the quality of the battery cell.

A coating that can increase a frictional force may further be provided on an outer wall of the hollow sleeve 4. The provision of the coating can increase a frictional force between the hollow sleeve 4 and the diaphragm 5, which not only facilitates winding, but also can stably keep the hollow sleeve 4 inside the battery cell.

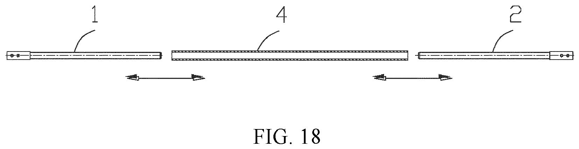

In some embodiments, the first connecting member 1 and the second connecting member 2 are connected to or apart from each other in the hollow sleeve 4. As shown in FIGs. 12, 13, and 14, the first connecting member 1 and the second connecting member 2 are connected to each other in the hollow sleeve 4. As shown in FIGs. 17 and 18, the first connecting member 1 and the second connecting member 2 are apart from each other in the hollow sleeve 4.

The first connecting member 1 and the second connecting member 2 being either connected to or apart from each other in the hollow sleeve 4 can be sleeved with the hollow sleeve 4, so that the resulting connection structure has higher strength. If an electrode plate and separator to be wound are relatively wide, the connection structure can be used.

In some embodiments, the hollow sleeve 4 is provided with a plurality of second ventilation holes 404.

Because the first connecting member 1, the second connecting member 2, and the hollow sleeve 4 are closely connected, the provision of the ventilation holes facilitates insertion of the first connecting member 1 and the second connecting member 2 into the hollow sleeve 4 and prevents deformation due to an excessive pressure inside the hollow sleeve 4.

The hollow sleeve 4 is made of plastic and does not affect the electrical performance of the battery cell when remaining inside the battery cell.

In some embodiments, surfaces of the first connecting member 1 and the second connecting member 2 are provided with coatings to reduce a frictional force generated during pull-out from the battery cell.

The coatings that can reduce the frictional force are provided, so that the first connecting member 1 and the second connecting member 2 can be easily pulled out from the battery cell when the winding mandrel is withdrawn after winding, which prevents the electrode plate and separator of a core from being displaced and prevents the core from being pulled out, thereby guaranteeing the quality of the battery cell.

In some embodiments, as shown in FIG. 3, the other end of the first connecting member 1 along its length direction is provided with a radial connecting hole 104, the other end of the second connecting member 2 along its length direction is also provided with a radial connecting hole 204, and the first connecting member 1 and the second connecting member 2 are configured to be fixed to a winding machine through the connecting holes.

The winding machine is provided with positioning pins or positioning screws corresponding to the connecting holes, and the first connecting member 1 and the second connecting member 2 are fixed to the winding machine through the radial connecting holes, facilitating assembly and disassembly.

According to a second aspect of this application, a winding machine is provided, including the winding mandrel according to any one of the foregoing embodiments.

The winding mandrel according to any one of the foregoing embodiments is used, which improves stiffness of the winding mandrel, enables the winding mandrel to bear a greater centrifugal force, and makes deflection deformation not prone to occur under a high-speed rotation state, so that the acceleration, deceleration, and maximum winding speed of the winding machine can be improved, thereby improving winding efficiency and reducing production costs.

In some embodiments, the winding machine includes a winding mandrel telescopic mechanism, and a first connecting member 1 and a second connecting member 2 are installed on the winding mandrel telescopic mechanism so as to be driven by the winding mandrel telescopic mechanism to approach or leave each other.

In some embodiments, the winding machine is provided with a separator pressing roller and a hook knife corresponding to the winding mandrel. The separator pressing roller and the hook knife can be driven by a driving mechanism to approach and leave the winding mandrel, respectively. When winding of an electrode plate and a separator starts, the separator pressing roller first approaches the winding mandrel to press the electrode plate and the separator to the winding mandrel. Secondly, the hook knife hooks ends of the electrode plate and separator to make the ends wound on the winding mandrel. Then, the winding mandrel performs winding at a small angle to make the electrode plate and the separator press their own ends. Finally, the hook knife and the separator pressing roller leave the winding mandrel in sequence, and the winding mandrel rotates normally to wind the electrode plate and the separator into a battery cell.

According to a third aspect of this application, a battery cell winding method is provided, including:
providing an electrode plate and a separator; and
winding the electrode plate and the separator using a winding mandrel, where the winding mandrel is the winding mandrel according to any one of the foregoing embodiments.

In conclusion, it should be noted that the foregoing embodiments are merely intended for describing the technical solutions of this application, but not for limiting this application. Although this application is described in detail with reference to the foregoing embodiments, persons of ordinary skills in the art should understand that they may still make modifications to the technical solutions described in the foregoing embodiments or make equivalent replacements to some technical features thereof, without departing from the spirit and scope of the technical solutions of the embodiments of this application.

## Claims

1. A winding mandrel, configured to wind a battery cell, comprising:
a first connecting member; and
a second connecting member configured to be combined with the first connecting member, wherein the second connecting member and the first connecting member are arranged coaxially, and length of the combined first connecting member and second connecting member is greater than length of the first connecting member or the second connecting member.

2. The winding mandrel according to claim 1, wherein the first connecting member comprises two ends along its own length direction; the second connecting member also comprises two ends along its own length direction; and one end of the first connecting member along its length direction and one end of the second connecting member along its length direction are combined.

3. The winding mandrel according to claim 2, wherein one end of the first connecting member along its length direction and one end of the second connecting member along its length direction are connected in an insertion manner.

4. The winding mandrel according to claim 2, wherein one end of the first connecting member along its length direction and one end of the second connecting member along its length direction are combined in a manner of being apart from each other.

5. The winding mandrel according to claim 2, wherein the winding mandrel further comprises an intermediate connecting member, and one end of the first connecting member along its length direction and one end of the second connecting member along its length direction are combined through the intermediate connecting member.

6. The winding mandrel according to claim 5, wherein the intermediate connecting member comprises a connecting rod, and two ends of the connecting rod are connected through insertion to one end of the first connecting member along its length direction and one end of the second connecting member along its length direction, respectively.

7. The winding mandrel according to claim 6, wherein the connecting rod is a solid rod or a hollow rod.

8. The winding mandrel according to claim 5, wherein the intermediate connecting member comprises a hollow sleeve, and the first connecting member and the second connecting member are inserted into the hollow sleeve from two ends of the hollow sleeve, respectively.

9. The winding mandrel according to claim 8, wherein the first connecting member and the second connecting member are connected to or apart from each other in the hollow sleeve.

10. The winding mandrel according to claim 8 or 9, wherein the hollow sleeve is provided with a plurality of ventilation holes.

11. The winding mandrel according to any one of claims 1 to 10, wherein surfaces of the first connecting member and the second connecting member are provided with coatings to reduce a frictional force generated during pull-out from the battery cell.

12. The winding mandrel according to any one of claims 2 to 10, wherein the other end of the first connecting member along its length direction is provided with a radial connecting hole; the other end of the second connecting member along its length direction is also provided with a radial connecting hole; and the first connecting member and the second connecting member are configured to be fixed to a winding machine through the connecting holes.

13. A winding machine, comprising the winding mandrel according to any one of claims 1 to 12.

14. The winding machine according to claim 13, wherein the winding machine comprises a winding mandrel telescopic mechanism, and the first connecting member and the second connecting member are installed on the winding mandrel telescopic mechanism so as to be driven by the winding mandrel telescopic mechanism to approach or leave each other.

15. A battery cell winding method, comprising:
providing an electrode plate and a separator; and
winding the electrode plate and the separator using a winding mandrel, wherein the winding mandrel is the winding mandrel according to any one of claims 1 to 12.
